# EUROPEAN PATENT APPLICATION

(11) **EP 2 062 820 A1**
(43) Date of publication of application: **27.05.2009**
(21) Application number: 08168871.5
(22) Date of filing: 11.11.2008
(51) Int. Cl.: B64G 1/28

(54) **Rotor assemblies with adjustable struts**

(30) Priority: 13.11.2007 US 939336
(71) Applicant: Honeywell International Inc., Morristown, NJ 07962 (US)
(72) Inventor: Hindle, Timothy A., Peoria, AZ 85383 (US); McMickell, M. Brett, Scottsdale, AZ 85255 (US)
(74) Representative: Buckley, Guy Julian

(57) **Abstract**

A rotor assembly includes a shaft; a mass; and a plurality of adjustable struts. The struts have a first end coupled to the shaft and a second end coupled to the mass such that the mass is movable with respect to the shaft.

## Description

### TECHNICAL FIELD

The present invention generally relates to rotor assemblies, and more particularly relates to rotor assemblies with adjustable struts.

### BACKGROUND

Momentum control devices having rotor assemblies are commonly used in spacecraft and other vehicles. The rotor assemblies of these momentum control devices are rotating inertia members used to transfer momentum with and to provide a torque to the host vehicle for attitude control and other purposes. The momentum control devices can be used individually or arranged in arrays. Examples of momentum control devices include control moment gyroscopes and reaction wheels.

Control moment gyroscopes (CMGs) are commonly used to provide attitude and momentum control for a variety of vehicles, including spacecraft and satellites. Control moment gyroscopes normally comprise a rotor assembly and a motor to spin the rotor about a rotor axis. The rotor assembly is typically supported in an inner gimbal assembly of a housing and is rotated about a gimbal axis. During operation of the gyroscope, the rotor is spun by a motor about its rotor axis at a predetermined rate. In order to induce a torque on the spacecraft, the spinning rotor is gimbaled about the gimbal axis. The rotor assembly is of sufficient mass and is spinning at such a rate that any movement of the rotor assembly out of its plane of rotation will induce a torque around an output axis that is both normal to the rotor axis and the gimbal axis. This torque is transferred to the vehicle to cause the vehicle to move in a controlled manner.

Similarly, reaction wheels are also commonly used to provide attitude and momentum control for a variety of vehicles. Reaction wheels typically comprise a rotor, bearings, and a motor, with the reaction wheel coupled to the vehicle structure, generally called a reaction wheel assembly (RWA). The motor provides the ability to vary the wheel speed of the rotor. As the rotor speed is varied, a momentum exchange occurs, and the motor provides a torque on the vehicle about the spin axis. In most applications, multiple reaction wheels are used in a reaction wheel array. The multiple reaction wheels in the array are arranged so that their spin axes span three dimensions for three axis control. Arranging the multiple reaction wheels in this way allows the array to apply torque to the vehicle along different axes, generally all three. Torque can be selectively applied to these axes to provide attitude control of the vehicle.

While traditional momentum control devices such as CMGs and RWAs are generally effective, they also can generate undesirable disturbances in the vehicle. Many systems of the vehicle may be sensitive to vibrations and other disturbances. Vibrations and other disturbances are particularly problematic in space systems, such as satellites. Vibrations in satellites can introduce a variety of errors and dramatically reduce the performance of the satellite. For example, satellites that are required to accurately orient themselves at a precise attitude or point a payload precisely are particularly vulnerable to vibrations and other disturbances that introduce jitter.

Generally, the primary disturbances created by momentum control devices such as RWAs and CMGs can be caused by rotor static and dynamic imbalances. Other disturbances may be created by the motor used to drive the rotor, by geometric imperfections in the bearings used to support the rotor, and by imperfections in the motor commutation circuits, which result in unwanted cogging and ripple torques.

Several different approaches have been used to reduce the effects of vibrations and other disturbances. These approaches include the use of passive devices, such as tuned-mass dampers and vibration isolators. Additionally, some active devices have been employed to attenuate or cancel these disturbances. Unfortunately, these past solutions have had several limitations. For example, passive devices typically eliminate only part of the disturbance. Past active devices, while generally being more effective, have also generally resulted in excessive power consumption and excessive weight, and have been computationally demanding.

Accordingly, it is desirable to provide rotor assemblies for momentum control devices that are adjustable to accommodate for disturbances without requiring excessive weight, computation and power consumption. In addition, it is desirable to provide rotor assemblies with adjustment actuators to minimize the primary rotor imbalance disturbances. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with one exemplary embodiment, a rotor assembly includes a shaft; a mass; and a plurality of adjustable struts. The struts have a first end coupled to the shaft and a second end coupled to the mass such that the mass is movable with respect to the shaft.

In accordance with another exemplary embodiment, a rotor assembly system includes a rotor assembly having a shaft, a mass, and a plurality of adjustable struts, each having a first end coupled to the shaft and a second end coupled to the mass such that the mass is movable with respect to the shaft. The system further includes an actuator coupled to each of the struts for adjusting the adjustable struts, a sensor coupled to the rotor assembly to measure imbalances in the rotor assembly, and producing first signals representing the imbalances; and a control processor configured to receive the first signals from the sensor and to provide second signals to the actuators to adjust the adjustable struts and correct the imbalance of the rotor assembly.

In accordance with yet another exemplary embodiment, a device for compensating imbalance in a rotor assembly includes a mass; and six adjustable struts configured to couple the mass to the rotor assembly such that the mass is movable with respect to the rotor assembly in three translational and three rotational degrees of freedom to compensate for the imbalance in the rotor assembly.

### BRIEF DESCRIPTION OF THE DRAWINGS

The present invention will hereinafter be described in conjunction with the following drawing figures, wherein like numerals denote like elements, and wherein:

FIG. 1 is a block diagram of a momentum control device system in accordance with an exemplary embodiment;

FIG. 2 is a side, cross-sectional view of an exemplary control motion gyroscope utilized in the momentum control device system of FIG. 1;

FIG. 3 is a top view of a rotor assembly of the control motion gyroscope of FIG. 2;

FIG. 4 is a bottom view of the rotor assembly of the control motion gyroscope of FIG. 2;

FIG. 5 is an isometric view of the rotor assembly of FIGS. 2-4; and

FIG. 6 is a perspective view of the rotor assembly of FIG. 4 that has been adjusted.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

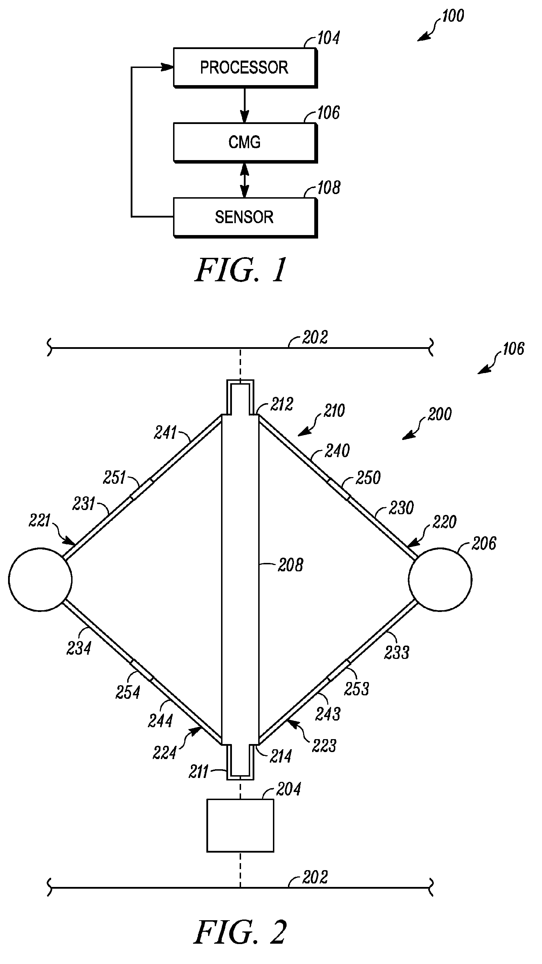

FIG. 1 is a block diagram of a momentum control device system 100 in accordance with an exemplary embodiment. The momentum control device system 100, in one embodiment, is mounted on a spacecraft such as an orbiting satellite and controls the attitude of the spacecraft. Although FIG. 1 shows an exemplary embodiment as a momentum control device system, aspects of other embodiments can be incorporated into any type of rotor control system and/or incorporated into any type of machine. Some of the components of the system 100 are known in the art and may be assembled in various ways using different processors, software, controllers, sensors, and the like. Additionally, various computational functionalities that are typically provided by one part of the system 100 can instead be provided by another part. The system 100 as shown in FIG. 1 includes parts that are pertinent to the discussion of exemplary embodiments, and the system 100 may include other elements or systems that might be provided in such a system 100 and which are well known and not shown in FIG. 1.

The system 100 includes a momentum actuator control processor 104. One or more momentum control devices, such as control motion gyroscopes (CMGs), 106 are coupled the momentum actuator control processor 104. The CMGs 106 may be coupled directly to the processor 104 or through intermediate devices. As described in further detail below, the CMGs 106 include a rotor assembly spun about an axis by a motor. The rotor assembly may be gimbaled in a housing to produce a torque around an output axis that is both normal to the rotor axis and the gimbal axis. This torque is transferred to the vehicle, causing the vehicle to move in a controlled manner. In other embodiments, the system 100 can include a reaction wheel assembly (RWA) or other types of momentum control devices.

During operation, the processor 104 receives operation commands concerning a desired spacecraft maneuver. Based on these operation commands, the processor 104 calculates the necessary gimbal angles and rates of one or more of the CMGs 106 to achieve the desired spacecraft maneuver. Based on these calculations, the processor 104 provides adjustment commands to the CMGs 106 to produce the torque necessary to execute the maneuver.

The system 100 also includes one or more sensors 108 associated with one or more of the CMGs 106. The sensors 108 collect data concerning the state of each CMG 106 and provide that data to the processor 104. Particularly, the sensors 108 collect information about imbalances in the CMGs 106 that may result in vibrations, noise, and/or unwanted torque. The processor 104 receives the data from the sensors 108 and calculates the adjustments in the CMGs 106 necessary to correct the imbalances. The processor 104 then provides adjustment commands to the CMGs 106 based on these calculations, and the CMGs 106 are adjusted accordingly, as will be discussed in further detail below.

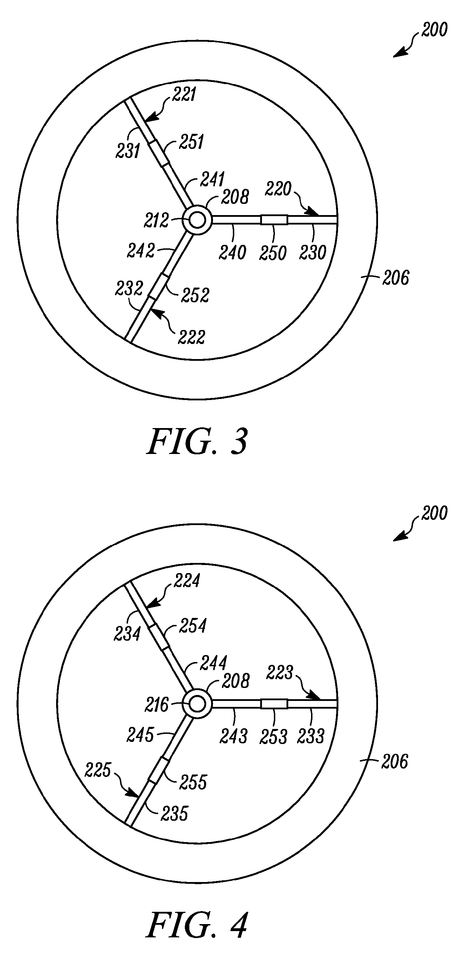

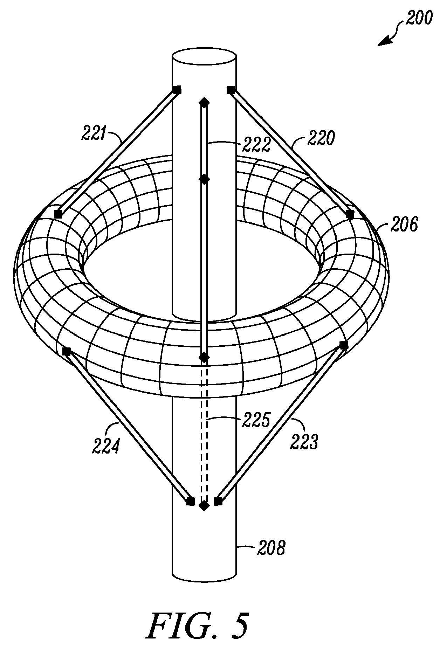

FIG. 2 is a side, cross-sectional view of an exemplary CMG 106 utilized in the momentum control device system 100 of FIG. 1. FIGS. 3 and 4 are respectively top and bottom views of a rotor assembly 200 of the CMG 106 of FIG. 2, and FIG. 5 is a perspective view of the rotor assembly 200.

Referring initially to FIG. 2, the CMG 106 includes the rotor assembly 200, a housing 202, and a motor 204. The rotor assembly 200 includes a mass 206 that is coupled to a shaft 208 with a support structure 210. Although not necessarily, the mass 206 is generally disk shaped and surrounds the shaft 208. The shaft 208 includes first and second ends 212 and 214 that are coupled to the housing 202 and the motor 204.

The motor 204 and/or housing 202 are coupled to the rotor assembly 200 to enable force and torque transfer to spin the rotor assembly 200, as well as to enable signal and power transfer to the rotor assembly 200. In one embodiment, bearings 211, which may include a slip-ring, roll-ring, or similar mechanism, can couple the rotor assembly 200 to the housing 202.

Referring now to FIGS. 2-5, the support structure 210 of the rotor assembly 200 includes six struts 220-225. Three struts 220-222 couple the mass 206 to the first end 212 of the shaft 208, and three struts 223-225 couple the mass 206 to the second end 214 of the shaft 208. Struts 220-222 can be aligned with struts 223-225, as shown in FIGS. 3 and 4, or in another embodiment, struts 220-222 can be offset with respect to struts 223-225. Moreover, although FIGS. 3 and 4 illustrate the struts 220-225 extending generally perpendicular from the shaft 208, the struts 220-225 can also extend from the shaft 208 at other angles. A greater or fewer number of struts 220-225 can be provided. The struts 220-225 are generally straight and stiff, and, as discussed below, may be adjustable. The struts 220-225 can have end-flexure or similar pivots on one or both ends. In one embodiment, the struts 220-225 may be manufactured from titanium.

Each of the struts 220-225 may have a first portion 230-235 and a second portion 240-245. The first and second portions 230-235 and 240-245 are respectively joined together by adjustment actuators 250-255. The adjustment actuators 250-255 enable adjustment of the struts 220-225 by lengthening or shortening based on signals from the processor 104 (FIG. 1). By providing an adjustment actuator 250-255 on each of the struts 220-225, the mass 206 of the rotor assembly 200 can be independently adjusted with respect to the rotor shaft 208 in three translational and three rotational degrees of freedom. The principal inertial axis of the rotor assembly 200 can particularly be adjusted to compensate for imbalances by aligning the rotor principal axis with the rotor spin axis. The adjustable struts 220-225 and adjustment actuators 250-255 may also adjust the rotating mass 200 to compensate for other vibrations or disturbances such as those caused by imperfections with the coupling between the rotor assembly 200 and the housing 202.

The adjustment actuators 250-255 can be, for example, stiff piezoelectric actuators. Piezoelectric actuators are formed from a material such as a ceramic or crystal that expands or contracts upon application of an electric charge. As noted above, the electric charge for the adjustment actuators 250-255 are provided by the processor 104 (FIG. 1). In one embodiment, the adjustment actuators 250-255 are manufactured or installed in a compressive preload condition to avoid tension overload during operation.

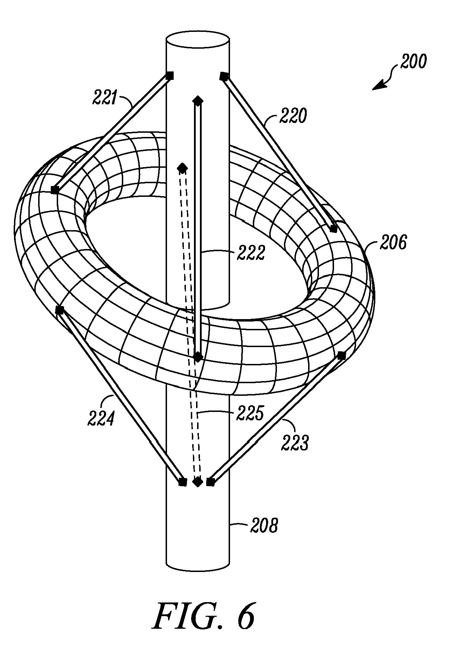

As one example, FIG. 5 is a view of the rotor assembly 200 in a neutral position. As discussed above, sensors 108 (FIG. 1) detect any imbalance in the rotor assembly 200 resulting in unwanted disturbances or vibrations. In various embodiments, the sensors 108 can be incorporated into the adjustable struts 220-225, other portions of the rotor assembly 200, and/or external to rotor assembly 200. The sensors 108 provide collected data to the processor 104 (FIG. 1), which calculates and provides the necessary adjustment commands to the adjustment actuators 250-255 of the rotor assembly 200. FIG. 6 is a view of the rotor assembly 200 in an adjusted position. In this example, struts 220, 221, 224, and 225 have been lengthened and struts 222 and 223 have been shortened to appropriately reposition the mass 206.

The exemplary embodiments described herein reduce vibrations and disturbances in CMGs 106 and other rotor assembly devices. As a result, the use of devices such as tuned-mass dampers and vibration isolators, as well as precision testing and balancing, can be reduced or eliminated. Imbalances in CMGs 106 can be counteracted without requiring excessive additional weight, power consumption, or computational demands. The adjustable struts and adjustment actuators are not limited to CMGs and can be used, for example, in RWAs or in any mechanical devices with a rotating mass, such as mechanical gyroscopes, flywheels, or helicopter rotors.

The adjustable struts 220-225 and adjustment actuators 250-255 can correct static and/or dynamic imbalances in the CMG 106. As noted above, the adjustable struts 220-225 and adjustment actuators 250-255 utilize adjustment of the rotating mass 206 to correct for imbalances in the rotor assembly 200, for example, by adjusting the orientation of the principal inertia axis of the rotor assembly 200. In other embodiments, the center of mass of a rotor can be adjusted by adjusting a secondary mass (not shown). The secondary mass may be coupled to the rotating mass and/or shaft by six struts that can be adjusted with adjustment actuators, as discussed above.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A rotor assembly (200), comprising
a shaft (208);
a mass (206); and
a plurality of adjustable struts (220), each having a first end (212) coupled to the shaft (208) and a second end (214) coupled to the mass (206) such that the mass (206) is movable with respect to the shaft (208).

2. The rotor assembly (200) of claim 1, wherein the plurality of adjustable struts (220) includes six struts.

3. The rotor assembly (200) of claim 1, wherein each of the struts (220) have a length, and wherein the rotor assembly (200) further comprises an actuator (250) coupled to each of the struts (220) for adjusting the length.

4. The rotor assembly (200) of claim 3, wherein the actuators (250) are piezoelectric actuators.

5. The rotor assembly (200) of claim 3, wherein each of the actuators (250) are configured to receive a signal to lengthen or shorten the struts (220).

6. The rotor assembly (200) of claim 3, wherein each of the adjustable struts (220) have first and second portions (230, 240) coupled together by one of the actuators (250).

7. The rotor assembly (200) of claim 1, wherein the adjustable struts (220) enable the mass (206) to be independently adjusted in three translational and three rotational degrees of freedom.
